# FASCICULE DE BREVET EUROPEEN

(11) **EP 3 722 936 B1**
(45) Date de publication et mention de la délivrance du brevet: **24.07.2024**
(21) Numéro de dépôt: 20168625.0
(22) Date de dépôt: 08.04.2020
(51) Int. Cl.: G06F 3/04883, G06F 3/14, G06F 3/147, G09G 5/14, G08G 5/00

(54) **SYSTÈME D'INTERACTION DU COCKPIT D'UN AÉRONEF**
INTERAKTIONSSYSTEM DES COCKPITS EINES LUFTFAHRZEUGS
INTERACTION SYSTEM FOR THE COCKPIT OF AN AIRCRAFT

(30) Priorité: 09.04.2019 FR 1903771
(43) Date de publication de la demande: 14.10.2020
(73) Titulaire: Thales, 92400 Courbevoie (FR)
(72) Inventeur: GARCIA, Jean-Sébastien, 33700 Merignac (FR); HELSEN, Veran, 33700 Merignac (FR); CHABOT, Philippe, 33700 Merignac (FR); LEULLIER, François, 33700 Merignac (FR)
(74) Mandataire: Lavoix

(56) Documents cités:
- EP-A1- 2 645 066
- EP-A1- 3 208 707
- EP-A1- 3 210 891
- US-A1- 2010 302 147
- US-A1- 2017 075 558

## Description

La présente invention concerne un système d'interaction du cockpit d'un aéronef.

Le domaine de l'invention est le domaine de l'aéronautique, et plus particulièrement le domaine des interactions homme-machine au sein du cockpit d'un aéronef.

De manière connue en soi, la mission de l'équipage de l'aéronef nécessite une multitude de données en provenance de systèmes très différents. Cela implique souvent la nécessité d'assurer des interactions efficaces et rapides entre ces différents systèmes et entre l'équipage et ces systèmes. Ce type d'interactions est connu sous le terme de « interactions homme-machine ».

Les cockpits modernes introduisent des capacités d'interactions avancées avec les systèmes avioniques en privilégiant les interactions tactiles.

L'usage du tactile requiert une grande réactivité de la part des systèmes mettant en oeuvre ces interactions, en particulier pour les nouveaux types d'interactions que ce media amène, comme par exemple le déplacement d'un élément graphique au doigt (« drag » en anglais), ou encore le contrôle d'un niveau de zoom par pincement ou étirement (« pinch » ou « spread » en anglais).

Parmi les systèmes utilisables par l'équipage dans le cockpit, on trouve notamment des systèmes, dits du monde avionique, tels que par exemple un calculateur de gestion du vol, et des équipements, dits du monde ouvert, tels que par exemple une tablette EFB (de l'anglais « Electronic Flight Bag » ou « Sac de vol électronique » en français).

Le développement des équipements monde ouvert au sein du cockpit et l'émergence d'un réseau connecté de plus en plus développé permettent d'envisager dans le monde ouvert des applications de plus en plus évoluées qui complètent les fonctionnalités du cockpit certifié.

La non criticité de ces applications permet une évolution rapide, régulière et à moindre coût.

Certains exemples d'interactions entre le monde ouvert et le monde avionique dans un aéronef sont donnés dans les documents EP 3 208 707 A1, US 2017/075558 A1, EP 3 210 891 A1 et US 2010/302147 A1.

Pour faciliter la continuité des opérations entre les applications du monde avionique, affichées dans le cockpit, et les applications du monde ouvert, affichées notamment sur la tablette EFB, il est intéressant de pouvoir afficher le contenu des applications du monde ouvert en utilisant les écrans du cockpit.

Ceci permet aussi de réduire l'encombrement du cockpit par un écran supplémentaire qui peut aussi limiter la visibilité externe et nécessiter une installation complexe pour être à portée de main du pilote. À la différence d'un tel écran supplémentaire, une tablette peut être installée facilement et même rangée dans un espace prévu à cet effet qui est appelé « rack ».

Pour intégrer au mieux les applications du monde ouvert et faciliter la mission, il est déjà possible d'afficher un contenu issu d'un équipement monde ouvert, tel qu'une tablette, dans les écrans de visualisation avioniques par une connexion vidéo.

Il est également possible d'exercer au moins certaines commandes en relation avec l'écran avionique de sorte à contrôler l'équipement monde ouvert.

Ainsi, par exemple, les déplacements du curseur exercés via un dispositif de pointage adapté, peuvent être exploités pour commander l'équipement monde ouvert.

Cependant, avec cette solution, il n'est possible d'adresser qu'un affichage du monde ouvert orienté en mode paysage et affiché en plein écran sur l'unité de visualisation avionique. Cette solution dépend également du système d'exploitation utilisé par l'équipement monde ouvert et peut se trouver inadaptée au moins pour certains de ces systèmes.

En outre, cette solution ne permet pas d'afficher le contenu issu du monde avionique par exemple de manière juxtaposée ou superposée avec une fenêtre dont le contenu est issu du monde ouvert. En effet, dans ce cas, la décentralisation de la gestion notamment du curseur n'a aurait pas permis d'assurer une transition continue entre les différentes fenêtres affichées.

Une autre solution identifiée pour pouvoir interagir dans le cockpit avec des équipements monde ouvert est de coupler fonctionnellement ces équipements avec des applicatifs avioniques afin d'importer dans le monde avionique des données issues du monde ouvert.

L'inconvénient de cette solution est qu'elle requiert la mise en oeuvre de mécanismes de sécurisation importants et coûteux (serveur sécurisé) entre le monde avionique et le monde ouvert pour éviter en particulier des risques d'intrusions malveillantes dans les systèmes avioniques. Cette solution qui n'est pas toujours compatible avec un déploiement sur un aéronef léger pour lequel on vise des coûts de matériel réduits, introduit par ailleurs des latences supplémentaires dans le traitement des données.

La présente invention a pour but de proposer un système d'interaction permettant de résoudre ces problèmes. Ainsi, le système d'interaction selon l'invention permet d'afficher sur un même écran avionique des informations issues des mondes différents tout en assurant des interactions continues en passant de l'un de ces mondes vers l'autre. Les échanges entre les deux mondes présentent un haut niveau de sécurité tout en évitant des latences supplémentaires dans le traitement des données. Finalement, le système selon l'invention permet d'adapter facilement tout équipement monde ouvert au fonctionnement avec le monde avionique, indépendamment du système d'exploitation utilisé.

À cet effet, l'invention a pour objet un système d'interaction conforme à la revendication 1.

Suivant d'autres aspects avantageux de l'invention, le système comprend une ou plusieurs des caractéristiques des revendications 2 à 14.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système d'interaction selon un premier mode de réalisation de l'invention, le système comprenant un boitier de raccordement ;
- les figures 2 et 3 sont des vues schématiques du boitier de raccordement de la figure 1 selon respectivement un premier et un deuxième exemples de réalisation de ce boitier ; et
- les figures 4 à 6 sont des vues schématiques illustrant respectivement un deuxième, un troisième et un quatrième modes de réalisation du système d'interaction selon l'invention.

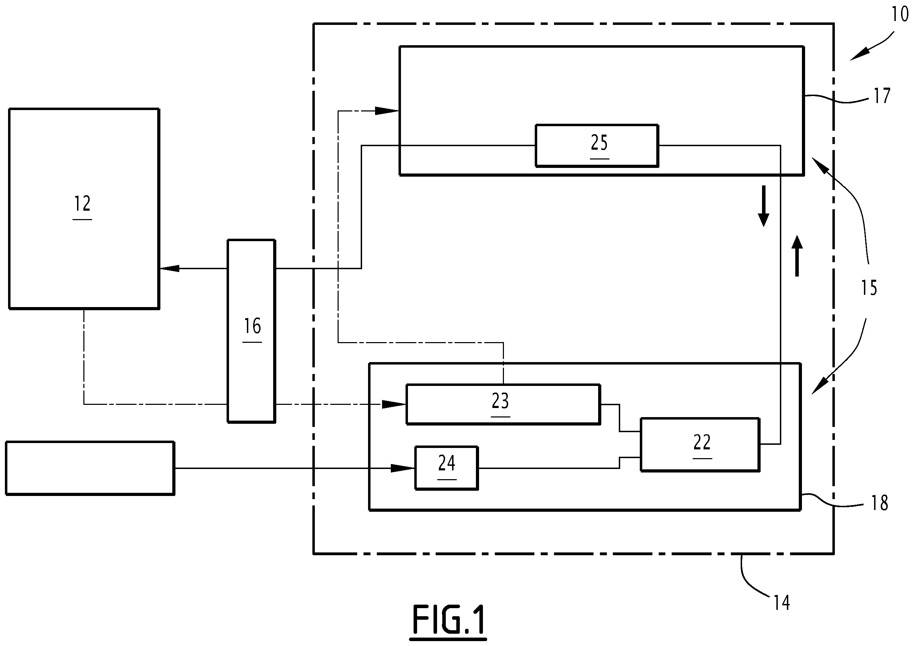

La figure 1 illustre en effet un système d'interaction 10 du cockpit d'un aéronef.

Par « aéronef », on comprend tout engin volant et pilotable au moins partiellement par au moins un pilote. Le pilotage s'effectue à partir d'un cockpit de cet aéronef.

Selon un exemple de réalisation, l'aéronef est un avion ou un hélicoptère. Dans ce cas, le pilotage s'effectue à partir du cockpit agencé dans cet avion ou hélicoptère.

Selon un autre exemple de réalisation, l'aéronef est un drone pilotable à distance. Dans ce cas, par « cockpit », on entend le centre de commande distant à partir duquel est effectué le pilotage.

Le système d'interaction 10 permet notamment de raccorder un équipement monde ouvert à un écran avionique afin de contrôler au moins partiellement le fonctionnement de cet équipement monde ouvert à l'aide de l'écran avionique.

Par « équipement monde ouvert », on entend tout équipement non-certifié ou disposant d'un niveau de certification inférieur à celui d'un système avionique qui est utilisable par le pilote pour préparer un vol et/ou assurer son bon déroulement.

Ainsi, un tel équipement monde ouvert présente un ordinateur (notamment un ordinateur portable), un téléphone (notamment un « smartphone ») ou une tablette (notamment une tablette tactile).

Selon l'invention, l'équipement monde ouvert permet notamment d'envoyer un flux graphique pour l'afficher sur un écran avionique comme cela sera décrit par la suite.

Par « flux graphique », on entend une pluralité d'images produites par une carte graphique de l'équipement monde ouvert et destinées à être affichées sur un écran. Ces images sont dépourvues de données fonctionnelles, c'est-à-dire de données numériques pouvant interagir avec d'autres données numériques.

Dans l'exemple décrit ci-dessous, l'équipement monde ouvert est une tablette tactile 12 de type EFB expliqué précédemment. Toutefois, tout enseignement décrit par la suite en relation avec une telle tablette avionique reste applicable à un équipement monde ouvert au sens large.

En référence à la figure 1, le système d'interaction 10 comprend un ensemble d'affichage 14 associé à un écran avionique 15 et un boitier de raccordement 16.

L'écran avionique 15 correspond à l'un des écrans présents dans le cockpit de l'aéronef. Ainsi, par exemple, l'écran avionique 15 est un écran central ou un écran latéral.

Par ailleurs, comme cela est connu en soi, l'écran avionique 15 présente une partie frontale 17 définissant une surface d'affichage et une dalle tactile associée à la surface d'affichage, et une partie arrière 18 définissant différentes composantes mettant en oeuvre le fonctionnement de la surface d'affichage.

L'ensemble d'affichage 14 permet de piloter le fonctionnement de l'écran avionique 15 et comprend à cet effet, un module de gestion de média 22, un module d'acquisition de vidéo 23 et un module d'acquisition de commandes 24 intégrés dans la partie arrière 18 et un module d'acquisition de gestes tactiles 25 intégré dans la partie frontale de l'écran avionique 15.

Ces différents modules 22 à 25 se présentent par exemple au moins partiellement sous la forme de logiciels exécutables par un ou plusieurs processeurs adaptés. En variante ou en complément, au moins certains de ces modules se présentent au moins partiellement sous la forme de circuits logiques programmables de type FPGA (de l'anglais « Field-Programmable Gate Array »).

Le module d'acquisition de gestes tactiles 25 est associé à la dalle tactile de l'écran avionique 15 et apte à acquérir chaque interaction tactile de l'utilisateur avec la surface d'affichage et à la convertir en une donnée d'interaction.

Ce module d'acquisition 25 est appelé également « module TAM » ce qui signifie en anglais « Touch Acquisition Module ».

Le module d'acquisition de commandes 24 est associé à un dispositif de pointage par exemple de type CCD (de l'anglais « Cursor Control Device ») et/ou à un clavier physique par exemple de type KBD (de l'anglais « KeyBoard Device »).

Ainsi, ce module 24 permet d'acquérir des commandes provenant de chacun de ces dispositifs et de les convertir en données d'interaction correspondantes.

Le module d'acquisition de commandes 24 et le module d'acquisition de gestes tactiles 25 génèrent alors des données d'interaction relatives à l'écran avionique 15. Ces modules 24, 25 forment ainsi le système d'interaction mentionné ci-dessus qui permet au pilote d'interagir avec l'écran avionique 15 et de contrôler ainsi le fonctionnement d'un ou de plusieurs systèmes avioniques ainsi que de la tablette avionique 12 comme cela sera expliqué par la suite.

Le module d'acquisition de vidéo 23 permet d'acquérir un flux graphique issu d'un ou de plusieurs systèmes avioniques et un flux graphique issu de la tablette 12 pour afficher ces flux en même temps sur l'écran avionique 15.

En particulier, le module d'acquisition de vidéo 23 permet d'afficher sur la surface avionique une première fenêtre de manière juxtaposée ou superposée avec au moins une deuxième fenêtre.

La première fenêtre, dite fenêtre monde avionique, est dédiée au monde avionique et permet donc d'afficher le flux graphique issu d'un ou plusieurs systèmes avioniques.

La deuxième fenêtre, dite fenêtre monde ouvert, est dédiée au monde ouvert et permet donc d'afficher un flux graphique issu notamment de la tablette 12.

Le module d'acquisition de vidéo 23 permet en outre d'effectuer au moins une opération de traitement du flux graphique issu de la tablette 12.

Chaque opération de traitement est choisie dans le groupe comprenant :
- extraction d'une région d'intérêt du flux graphique reçu ;
- rotation du flux graphique reçu ;
- mise à l'échelle du flux graphique reçu en fonction de la résolution de ce flux et de la résolution de la deuxième fenêtre ;
- translation du flux graphique reçu.

En particulier, l'extraction d'une région d'intérêt permet notamment de zoomer sur une partie de flux graphique.

La rotation du flux graphique permet notamment d'adapter la présentation portrait ou paysage de la tablette 12.

La mise à l'échelle permet notamment d'adapter la résolution de l'image fournie par la tablette à la fenêtre dans laquelle elle est affichée.

La translation permet notamment de positionner l'image vidéo à la position souhaitée sur l'écran avionique 15.

Selon un exemple de réalisation, le module d'acquisition de vidéo 23 comprend deux composantes appelées VAM (de l'anglais « Video Acquistion Module ») et GGM (de l'anglais Graphie Génération Module »). La première de ces composantes permet d'acquérir le flux graphique issu de la tablette 12 et la deuxième permet d'effectuer au moins une opération de traitement de ce flux.

Le module de gestion de média 22 est raccordé au module d'acquisition de commandes 24 et au module d'acquisition de gestes tactiles 25 et permet de traiter des données d'interaction issues de ces modules 24, 25.

En fonction des données d'interaction traitées, le module de gestion de média 22 permet de piloter le fonctionnement du module d'acquisition de vidéo 23.

En particulier, il permet de commander l'exécution d'une opération de traitement et la modification de la position et/ou de la dimension de la fenêtre monde ouvert ou monde avionique, suite une commande correspondante du pilote donnée par exemple par un geste tactile.

Le module de gestion de média 22 permet en outre de générer des données de fenêtrage relatives à la disposition de différentes fenêtres sur l'écran d'affichage et notamment de la fenêtre monde ouvert, et de transmettre ces données vers le module d'acquisition de gestes tactiles 25.

Enfin, le module de gestion de média 22 permet également d'inhiber ou de réduire la fenêtre monde ouvert si une ou plusieurs fenêtres monde avionique sont ouvertes en superposition avec cette fenêtre monde ouvert. Cela correspond alors à un principe de préemption des interactions relatives au monde avionique.

Les données de fenêtrage comprennent au moins l'un des éléments choisi dans le groupe comprenant :
- origine de la fenêtre monde ouvert dans le référentiel de l'écran avionique de l'ensemble d'affichage ;
- dimensions de la fenêtre monde ouvert ;
- recadrage du flux graphique issu de l'équipement monde ouvert lorsque ce flux est recadré dans la fenêtre monde ouvert.

Le module de gestion de média 22 permet en outre de transmettre vers le module d'acquisition de gestes tactiles des données d'interaction générées par le modules d'acquisition de commande 24.

Le boitier de raccordement 16 permet de raccorder la tablette 12 à l'écran avionique 15.

Selon un exemple particulier de réalisation de l'invention, le boitier de raccordement 16 se présente sous la forme d'une station d'accueil de la tablette 12 et définit donc un logement avec une connectique adaptée afin de recevoir la tablette et d'envoyer et de recevoir des données vers cette tablette ou issues de celle-ci.

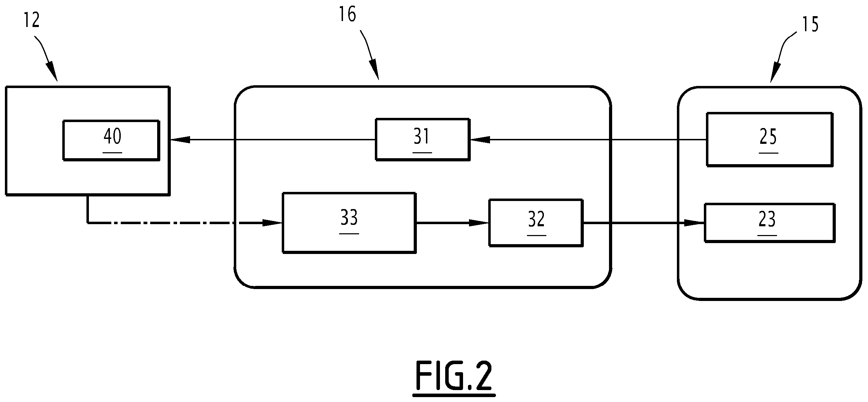

La structure interne du boitier de raccordement selon un premier exemple de réalisation est illustrée sur la figure 2.

En particulier, comme cela est visible sur cette figure 2, le boitier de raccordement 16 comprend un premier module de conversion 31, un deuxième module de conversion 32 et un module d'adaptation 33.

Comme dans le cas précédent, ces modules 31 à 33 se présentent au moins partiellement sous la forme de logiciels et/ou des circuits logiques programmables de type FPGA.

Le premier module de conversion 31 est raccordé à la partie frontale 17 de l'écran avionique 15 et notamment au module d'acquisition de gestes tactiles 25 par une liaison unidirectionnelle allant à partir du module d'acquisition de gestes tactiles 25 via par exemple un câble par exemple de type RS422.

Ainsi, le premier module de conversion 31 est apte à recevoir des données d'interaction générées par le module d'acquisition de gestes tactiles 25 et/ou transmises à celui-ci par le module de gestion de média 22 ainsi que les données de fenêtrage transmises à ce module 25 par le module de gestion de média 22.

Le module 31 permet en outre de convertir les données acquises en une forme exploitable par la tablette 12.

Le premier module de conversion 31 est raccordé à un module de commande 40 de la tablette 12 qui est, selon l'exemple de réalisation de la figure 2, intégré dans la tablette 12. Ce raccordement est effectué via une liaison unidirectionnelle allant à partir du premier module de conversion, par exemple via un câble par exemple de type USB.

Le module de commande 40 fait également partie du système d'interaction 10 selon l'invention et se présente par exemple sous la forme d'un logiciel, notamment d'un logiciel pilote, intégré dans la tablette 12 et permettant d'émuler des périphériques d'interaction (dalle tactile, souris, clavier) au niveau du système d'exploitation de la tablette 12.

Ce module 40 permet notamment d'analyser les données de fenêtrage et les données d'interaction acquises par le premier module de conversion 31.

En particulier, parmi les données d'interaction, le module de commande 40 permet d'extraire des données d'interaction relatives à la fenêtre monde ouvert, en utilisant les données de fenêtrage. Puis, le module de commande 40 permet d'associer aux données d'interaction extraites des commandes correspondantes en supposant que ces données ont été générées directement par les périphériques d'interaction de la tablette 12.

Le module d'adaptation 33 est raccordé à la tablette 12 via une liaison unidirectionnelle allant à partir de la tablette 12 et formée par exemple par un câble de type USB. Cette liaison permet d'acquérir un flux graphique issu de la tablette 12. Dans le cas où le module de conversion 31 est raccordé à la tablette 12 via également un câble, il est possible de prévoir un câble assemblé bidirectionnelle unique, par exemple de type USB, raccordant la tablette 12 au boitier de raccordement 16 via un connecteur unique.

Le module d'adaptation 33 permet également de transmettre ce flux graphique au deuxième module de conversion 32 en effectuant préalablement un traitement de ce flux consistant par exemple à modifier ses dimensions en particulier par ré-échantillonnage et/ou par modification de son ratio largeur/hauteur en ajoutant des bandes noires. Le deuxième module de conversion 32 est raccordé à la partie arrière 18 de l'écran avionique 15 et notamment au module d'acquisition de vidéo 23 expliqué précédemment. Ce raccordement présente également une liaison unidirectionnelle et est effectué par exemple par un câble par exemple de type SMPTE ou ARINC 818 ou HDMI.

Le deuxième module de conversion 32 permet de convertir le flux graphique acquis par le module 33 en une forme exploitable par le module d'acquisition de vidéo 23.

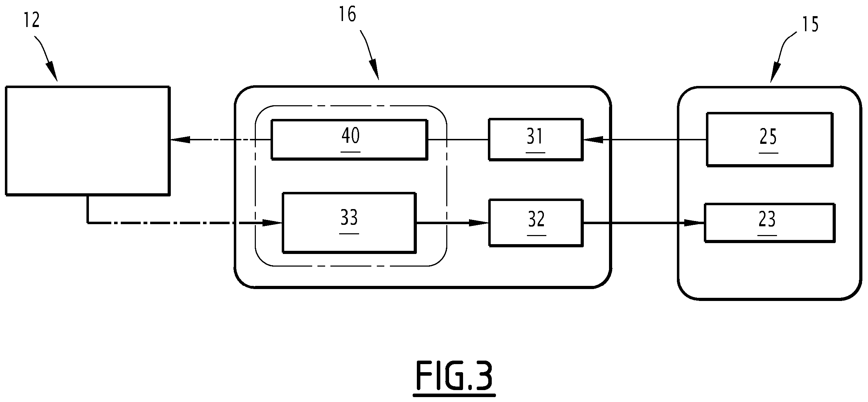

Le boitier de raccordement 16 selon un deuxième exemple de réalisation est illustré sur la figure 3.

Comme dans le cas précédent, ce boitier comprend le premier module de conversion 31, le deuxième module de conversion 32 ainsi que le module d'adaptation 33 décrits précédemment.

À la différence du premier exemple de réalisation, le boitier de raccordement 16 comprend en outre le module de commande 40 tel que expliqué précédemment.

Dans ce cas, le module de commande 40 est raccordé à la tablette via un câble par exemple de type USB ou alors, via une connexion sans fil telle que Bluetooth^{®} ou Wi-Fi.

Ainsi, par la tablette 12, le module de commande 40 est vu comme un périphérique extérieur tel qu'un clavier par exemple.

Par ailleurs, dans les deux exemples de réalisation, le module d'adaptation 33 peut être raccordé à la tablette 12 également via une connexion sans fil telle que Wi-Fi.

Selon encore un autre exemple de réalisation (non-illustré), le module de commande 40 se présente sous la forme de deux composantes distinctes, l'une étant intégrée dans la tablette 12 et l'autre dans le boitier 16. Dans ce cas, ces composantes réalisent des fonctions distinctes.

Le fonctionnement du système d'interaction 10 selon l'invention sera désormais expliqué.

Il est supposé initialement que le module d'acquisition vidéo 23 affiche sur l'écran avionique 15 un flux graphique issu de la tablette 12 dans la fenêtre monde ouvert de manière juxtaposée avec la fenêtre monde avionique.

Cet affichage est géré par le module de gestion de média 22 qui génère par ailleurs des données d'affichage relatives à la disposition de ces différentes fenêtres sur l'écran d'affichage 15.

Lorsque le pilote exerce une action en relation avec le dispositif de pointage ou le clavier, le module de gestion d'affichage reçoit du module d'acquisition 24 des données d'interaction correspondantes et les transmet au module d'acquisition de gestes tactiles 25.

Lorsque le pilote exerce un geste tactile en relation avec la surface d'affichage, le module d'acquisition de gestes tactiles 25 génère lui-même des données d'interaction correspondantes.

Puis, dans les deux cas, le module d'acquisition de gestes tactiles 25 transmet les données d'interaction au module de commande 40 de la tablette 12 à travers le premier module de conversion 31.

Le module de commande 40 analyse alors ces données et lorsque les données d'interaction correspondent à la fenêtre monde ouvert, exerce la commande correspondante.

Cette commande modifie alors le flux graphique généré par la tablette qui est transmis ensuite au module d'acquisition vidéo 23 à travers notamment le deuxième module de conversion 32, pour être affiché sur l'écran avionique.

Lorsque l'action exercée par le pilote concerne un recadrage de la fenêtre monde ouvert, le module de gestion de média 22 convertit donc les données d'interaction générées par le dispositif de pointage, le clavier ou le module d'acquisition de gestes tactiles 25 en une commande correspondante qui est transmise au module d'acquisition de vidéo 23.

Ce module 23 met alors en oeuvre cette commande en exerçant une opération de traitement correspondante. De nouvelles données de fenêtrage sont finalement générées par le module de gestion de média 22 et sont transmises à la tablette à travers le module d'acquisition de gestes tactiles 25 et le premier module de conversion 31.

On conçoit alors que l'invention présente un certain nombre d'avantages.

Tout d'abord, l'invention permet d'afficher et d'interagir depuis l'écran avionique avec une application hébergée sur un équipement monde ouvert, tel qu'une tablette par exemple.

Pour cela, une fenêtre dédiée au monde ouvert est affichée sur l'écran avionique de façon juxtaposée ou superposée avec une fenêtre dédiée au monde avionique.

Les dimensions, la position et l'orientation de cette fenêtre monde ouvert peuvent être modifiées par le pilote. De plus, en cas de superposition, les interactions avec la fenêtre monde ouvert peuvent être préemptées.

En outre, la gestion centralisée des données d'interaction permet de fluidifier les transitions notamment du curseur entre une fenêtre monde ouvert et une fenêtre monde avionique.

De plus, l'invention offre une solution optimale en termes de latences d'interaction car le module d'acquisition de gestes tactiles est connecté directement au premier module de conversion.

En outre, l'invention nécessite une connexion simple car tous les échanges sont effectués à travers des connexions unidirectionnelles. La simplicité d'une telle connexion contribue également à obtenir des latences d'interaction réduites.

En outre, seules les données correspondant à des flux graphiques sont transmises vers le monde avionique. Ainsi, il n'est pas nécessaire d'utiliser un serveur sécurisé lors de la transmission de ces données.

Finalement, tout équipement monde avionique peut être facilement adapté pour interagir avec le boitier de raccordement.

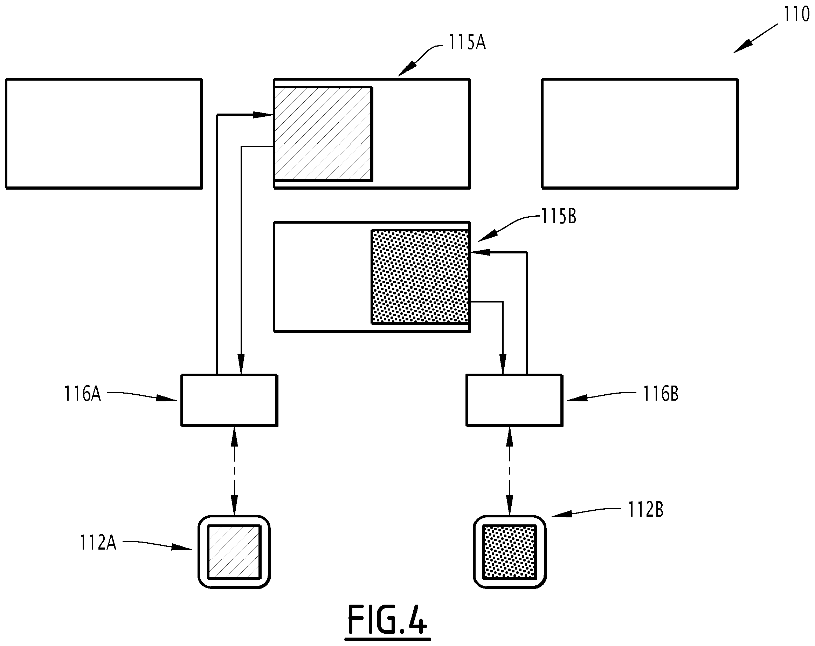

Un système d'interaction 110 selon un deuxième mode de réalisation est illustré sur la figure 4.

À la différence du système d'interaction 10 décrit précédemment, le système d'interaction 110 comprend deux ensembles d'affichage (non-visibles sur la figure 4) associés à deux écrans avioniques 115A, 115B différents et deux boitiers de raccordement 116A, 116B associés à deux équipements monde ouvert 112A, 112B différents.

Chaque ensemble d'affichage est analogue à l'ensemble d'affichage 14 décrit précédemment et chaque boitier de raccordement 116A, 116B est analogue au boitier de raccordement 16 décrit précédemment.

Ainsi, dans l'exemple de la figure 4, le boitier 116A permet de raccorder l'équipement monde ouvert 112A à l'écran avionique 115A et le boitier 116B permet de raccorder l'équipement monde ouvert 112B à l'écran avionique 115B.

Le système d'interaction 110 selon le deuxième mode de réalisation permet ainsi d'utiliser dans le cockpit deux équipements monde ouvert, par exemple par deux pilotes en même temps, en utilisant deux écrans avioniques différents.

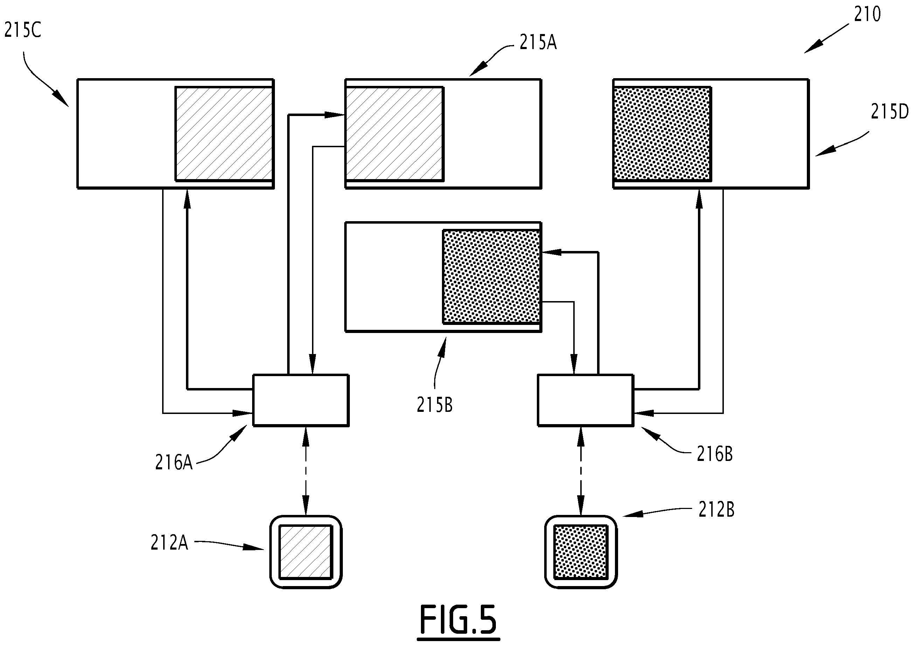

Un système d'interaction 210 selon un troisième mode de réalisation de l'invention est illustré sur la figure 5.

Comme dans le cas du système d'interaction 100, le système d'interaction 200 comprend deux boitiers de raccordement 216A, 216B associés à deux équipements monde ouvert 212A, 212B différents.

À la différence du cas précédent, chaque boitier de raccordement 216A, 216B permet de raccorder l'équipement monde ouvert à deux écrans avioniques différents.

Ainsi, dans l'exemple de la figure 5, le boitier de raccordement 216A permet de raccorder l'équipement monde ouvert 212A aux écrans avioniques 215A et 215C et le boitier de raccordement 216B permet de raccorder l'équipement monde ouvert 212B aux écrans avioniques 215B et 215D.

Dans ce cas, pour chaque écran avionique, le système d'interaction 210 comprend en outre un ensemble d'affichage (non-visible sur la figure 5) analogue à l'ensemble d'affichage 14 décrit précédemment.

Chaque boitier de raccordement 216A, 216B diffère du boitier de raccordement 16 décrit précédemment uniquement en ce que le deuxième module de conversation de chaque boitier de raccordement 216A, 216B est raccordé aux deux ensembles d'affichage différents et configuré pour envoyer un flux graphique vers chacun de ces ensembles d'affichage.

Par ailleurs, le deuxième module de conversation de chaque boitier de raccordement 216A, 216B est raccordé aux deux ensembles d'affichage différents et configuré pour envoyer un flux graphique vers chacun de ces ensembles d'affichage.

En outre, le premier module de conversion de chaque boitier de raccordement 216A, 216B est adapté pour recevoir des données d'interaction et des données de fenêtrage issues de chaque ensemble d'affichage auquel il est connecté.

Toutefois, dans ce cas, le premier module de conversion de chaque boitier de raccordement 216A, 216B comprend un commutateur permettant de recevoir au moins des données d'interaction d'un seul ensemble d'affichage.

Pour ce faire, un tel commutateur se présente par exemple sous la forme d'un logiciel ou d'un circuit logique programmable permettant de traiter des données d'interaction provenant d'une seule entrée, c'est-à-dire d'un seul ensemble d'affichage.

Ce commutateur est par exemple commutable manuellement par le pilote via une interface correspondante.

Par ailleurs, en cas de dysfonctionnement d'un tel commutateur, le premier module de conversion correspondant est configuré pour ignorer toute donnée d'interaction reçue.

Le système d'interaction 210 selon le troisième mode de réalisation permet ainsi d'associer un équipement monde ouvert à plusieurs écrans avioniques.

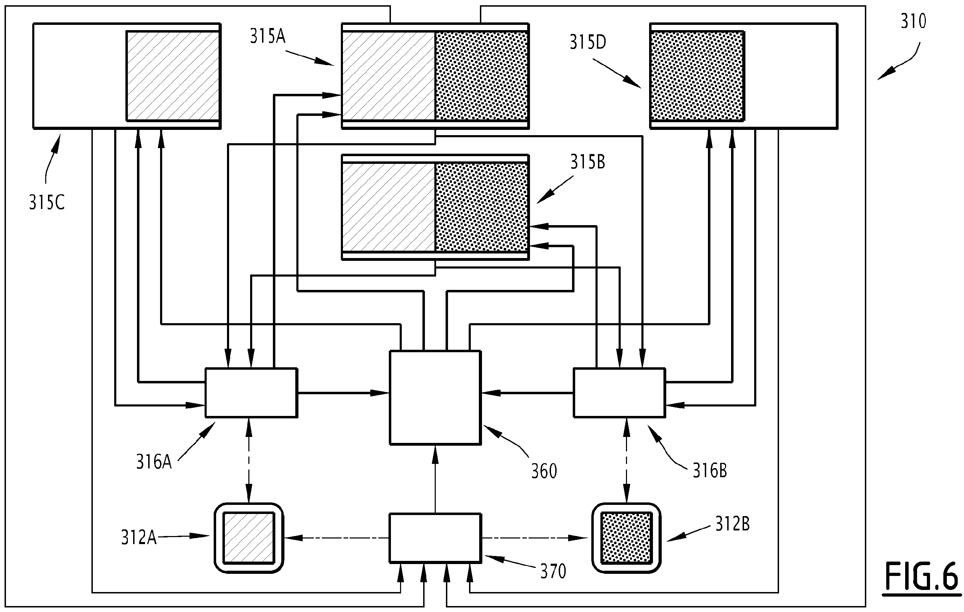

Un système d'interaction 310 selon le quatrième mode de réalisation est illustré en détail sur la figure 6.

Ainsi, comme cela est visible sur cette figure 6, le système d'interaction 310 comprend deux boitiers de raccordement 316A, 316B analogues aux boitiers de raccordement 216A, 216B décrits précédemment et un ensemble d'affichage (non-illustré) pour chaque écran avionique utilisé. En particulier, chaque boitier de raccordement 316A, 316B permet de raccorder un équipement monde ouvert 312A, 312B à plusieurs écrans avioniques.

Dans l'exemple de réalisation de la figure 6, chaque boitier de raccordement 316A, 316B permet de raccorder l'équipement monde ouvert correspondant à l'ensemble des écrans avioniques 315A à 315D.

Pour ce faire, selon ce mode de réalisation, le système d'interaction 310 comprend en outre un serveur de vidéo 360 et un serveur de commande 370.

En particulier, le serveur de vidéo 360 permet de transmettre un flux graphique issu de l'un des boitiers de raccordement 316A, 316B à plusieurs écrans avioniques 315A à 315D via par exemple un câble de type SMPTE.

Le module d'acquisition de vidéo de chaque ensemble d'affichage est ainsi adapté pour recevoir un flux graphique non seulement de l'un des boitiers de raccordement 316A, 316B mais également du serveur graphique 360.

Le module d'acquisition de vidéo de chaque ensemble d'affichage est par ailleurs adapté pour afficher des flux graphiques issus des équipements monde ouvert 312A, 312B différents dans des fenêtres monde ouvert différentes sur une même surface d'affichage.

Le serveur de commande 370 permet de transmettre des données d'interaction ainsi que des données de fenêtrage à l'équipement monde ouvert 312A, 312B auquel ces données sont destinées.

À cette effet, le serveur de commande 370 est raccordé d'une part à chaque ensemble d'affichage via par un exemple une liaison de type Ethernet et d'autre part à chaque équipement monde ouvert 312A, 312B par exemple via une liaison sans fil par exemple de type Wi-Fi ou alors via une liaison filaire de type USB ou Ethernet.

Selon un exemple de réalisation, le serveur de commande 370 est raccordé à chaque équipement monde ouvert 312A, 312B à travers le boitier de raccordement 316A, 316B correspondant pour pouvoir adresser la solution décrite par la figure 3 (exploitation des données de fenêtrage réalisées dans ce boitier de raccordement), ou centraliser les flux d'échange dans le cas de la solution de la figure 2. Dans ce dernier cas, il est possible de prévoir un connecteur unique, par exemple de type USB, gérant l'ensemble des flux.

Dans l'exemple de la figure 6, le boitier de raccordement 316A raccorde l'équipement monde ouvert 312A directement aux écrans avioniques 315A et 315C et via le serveur vidéo 360 aux écrans 315B et 315D.

Ainsi, les échanges des flux graphiques et des données d'interaction et de fenêtrage entre l'équipement monde ouvert 312A et les ensembles d'affichage associés aux écrans avioniques 315A, 315C s'effectuent comme expliqué précédemment en relation avec la figure 5.

En revanche, la transmission des flux graphiques à partir de l'équipement monde ouvert 312A vers les ensembles d'affichage associés aux écrans avioniques 315B, 315D s'effectue via le boitier de raccordement 316A et puis, via le serveur de vidéo 360.

La transmission des données d'interaction et de fenêtrage issues des ensembles d'affichage associés aux écrans avioniques 315B, 315D vers l'équipement monde ouvert 312A s'effectue via le serveur de commande 370.

De manière analogue, selon le même exemple, le boitier de raccordement 316B raccorde l'équipement monde ouvert 312B directement aux écrans avioniques 315B et 315D et via le serveur vidéo 360 aux écrans 315A et 315C.

Ainsi, les échanges des flux graphiques et des données d'interaction et de fenêtrage entre l'équipement monde ouvert 312B et les ensembles d'affichage associés aux écrans avioniques 315B, 315D s'effectuent comme expliqué précédemment en relation avec la figure 5.

Les échanges des flux graphiques et des données d'interaction et de fenêtrage entre l'équipement monde ouvert 312B et les ensembles d'affichage associés aux écrans avioniques 315A, 315C s'effectuent via le serveur de vidéo 360 à travers le boitier de raccordement 316B ou via le serveur de commande 370.

On conçoit alors que le système d'interaction 310 selon le quatrième mode de réalisation permet non seulement de raccorder chaque équipement monde ouvert à l'ensemble des écrans avioniques mais également d'afficher sur un même écran avionique des flux graphiques issus des équipements avioniques différents et de piloter donc des équipements monde ouvert différents via un même écran avionique.

Bien entendu, d'autres exemples de raccordement entre des équipements monde ouvert et des écrans avioniques du cockpit sont possibles.

On conçoit aisément qu'au moins dans certains modes de réalisation, le module d'acquisition de gestes tactiles est connecté au module de commande de l'équipement monde ouvert directement, en passant uniquement via le premier module de conversion du boitier. Cela permet de minimiser la latence et de conserver la fréquence de rafraichissement des données issues du module d'acquisition de gestes tactiles.

De plus, le raccordement du module de gestion de média au premier module de conversion via le module d'acquisition de gestes tactiles permet d'effectuer le calcul des données de configuration d'affichage moins critiques en termes de latence (comme par exemple la position) par le monde avionique et notamment par l'ensemble d'affichage. Ces données sont transmises ensuite au module de commande de l'équipement monde ouvert avec les données issues du module d'acquisition de gestes tactiles, par des liaisons directes.

Enfin, il est clair que l'invention permet de mettre en oeuvre une liaison physique unique et sécurisée entre le monde avionique et le monde ouvert pour envoyer l'ensemble des données d'interaction.

## Revendications

1. Système d'interaction (10 ; 110 ; 210 ; 310) du cockpit d'un aéronef comprenant :
- un ensemble d'affichage (14) associé à un écran avionique (15 ; 115A, 115B ; 215A,...,215D ; 315A,...,315D) et comportant :
+ un module d'acquisition de vidéo (23) configuré pour acquérir un premier flux graphique issu d'un système avionique et un deuxième flux graphique issu d'un équipement monde ouvert (12 ; 112A, 112B ; 212A, 212B ; 312A, 312B) ;
+ un module de gestion de média (22) configuré pour contrôler l'affichage sur l'écran avionique (15 ; 115A, 115B ; 215A,...,215D ; 315A,...,315D) pour afficher sur cet écran le premier flux graphique dans une première fenêtre et le deuxième flux graphique dans une deuxième fenêtre, le module de gestion de média (22) étant configuré en outre pour générer des données de fenêtrage relatives à la disposition de différentes fenêtres sur l'écran d'affichage (15 ; 115A, 115B ; 215A,...,215D ; 315A,...,315D) ; et
+ un ensemble d'interaction (24, 25) apte à générer des données d'interaction relatives à chaque interaction d'un utilisateur avec l'écran avionique (15 ; 115A, 115B ; 215A,...,215D ; 315A,...,315D) ;
- un boitier de raccordement (16 ; 116A, 116B ; 216A, 216B ; 316A, 316B) de l'équipement monde ouvert (12; 112A, 112B ; 212A, 212B ; 312A, 312B) comprenant :
+ un premier module de conversion (31) configuré pour recevoir les données de fenêtrage issues du module de gestion de média (22) et les données d'interaction issues de l'ensemble d'interaction (24, 25) ;
+ un deuxième module de conversion (32) apte à recevoir un flux graphique issu de l'équipement monde ouvert (12 ; 112A, 112B ; 212A, 212B ; 312A, 312B) et à le transmettre au module d'acquisition de vidéo (23) pour l'afficher dans la deuxième fenêtre de l'écran avionique (15 ; 115A, 115B ; 215A,...,215D ; 315A,...,315D) ;
- un module de commande (40) de l'équipement monde ouvert (12 ; 112A, 112B ; 212A, 212B ; 312A, 312B) configuré pour traiter les données de fenêtrage et les données d'interaction issues du premier module de conversion (31) pour générer à partir d'au moins certaines des données d'interaction une commande destinée à l'équipement monde ouvert (12 ; 112A, 112B ; 212A, 212B ; 312A, 312B);
dans lequel l'ensemble d'interaction (24, 25) comprend un module d'acquisition de gestes tactiles (25) configuré pour acquérir chaque interaction tactile de l'utilisateur avec l'écran avionique (15 ; 115A, 115B ; 215A,...,215D ; 315A,...,315D) et à la convertir en une donnée d'interaction;
**caractérisé en ce que** le module de gestion de média (22) est raccordé au premier module de conversion (31) via le module d'acquisition de gestes tactiles (25).

2. Système d'interaction (10 ; 110 ; 210 ; 310) selon la revendication 1, dans lequel le module d'acquisition de gestes tactiles (25) est connecté au module de commande (40) de l'équipement monde ouvert (12 ; 112A, 112B ; 212A, 212B ; 312A, 312B) via le premier module de conversion (31).

3. Système d'interaction (10 ; 110 ; 210 ; 310) selon l'une quelconque des revendications précédentes, dans lequel l'ensemble d'interaction (24, 25) comprend un module d'acquisition de commandes (24) configuré pour acquérir chaque interaction de l'utilisateur exercée sur un dispositif de pointage et/ou un clavier, le module d'acquisition de commandes (24) étant raccordé directement au module de gestion de média (22).

4. Système d'interaction (10 ; 110 ; 210 ; 310) selon l'une quelconque des revendications précédentes, dans lequel le module d'acquisition de vidéo (23) est configuré pour exercer au moins une opération de traitement du deuxième flux graphique, chaque opération de traitement étant choisi dans le groupe comprenant :
- extraction d'une région d'intérêt de ce flux graphique ;
- rotation de ce flux graphique ;
- mise à l'échelle de ce flux graphique en fonction de la résolution de ce flux et de la résolution de la deuxième fenêtre ;
- translation de ce flux graphique.

5. Système d'interaction (10 ; 110 ; 210 ; 310) selon l'une quelconque des revendications précédentes, dans lequel le module de commande (40) est apte à convertir chaque donnée d'interaction dans le référentiel de l'équipement monde ouvert (12 ; 112A, 112B ; 212A, 212B ; 312A, 312B) en utilisant les données de fenêtrage correspondantes.

6. Système d'interaction (10 ; 110 ; 210 ; 310) selon l'une quelconque des revendications précédentes, dans lequel les données de fenêtrage comprennent :
- origine de la deuxième fenêtre dans le référentiel de l'écran avionique (15 ; 115A, 115B ; 215A,...,215D ; 315A,...,315D) ;
- dimensions de la deuxième fenêtre ;
- recadrage du deuxième flux.

7. Système d'interaction (10 ; 110 ; 210 ; 310) selon l'une quelconque des revendications précédentes, dans lequel le module de commande (40) est intégré dans le boitier de raccordement (16 ; 116A, 116B ; 216A, 216B ; 316A, 316B).

8. Système d'interaction (10 ; 110 ; 210 ; 310) selon l'une quelconque des revendications 1 à 6, dans lequel le module de commande (40) est intégré dans l'équipement monde ouvert (12 ; 112A, 112B ; 212A, 212B ; 312A, 312B).

9. Système d'interaction (10 ; 110 ; 210 ; 310) selon l'une quelconque des revendications précédentes, dans lequel :
- le boitier de raccordement (16 ; 116A, 116B ; 216A, 216B ; 316A, 316B) est raccordé à l'ensemble d'affichage (14) via au moins deux câbles, l'un des deux câbles raccordant le premier module de conversion (31) à l'ensemble d'affichage (14) et étant avantageusement de type RS422, et l'autre câble raccordant le deuxième module de conversion (32) à l'ensemble d'affichage (14) et étant avantageusement de type SMPTE ;
- le boitier de raccordement (16 ; 116A, 116B ; 216A, 216B ; 316A, 316B) est raccordé à l'équipement monde ouvert (12 ; 112A, 112B ; 212A, 212B ; 312A, 312B) via au moins deux câbles, avantageusement assemblés entre eux et reliés à l'équipement monde ouvert (12 ; 112A, 112B ; 212A, 212B ; 312A, 312B) via un connecteur unique, ou via un câble et une liaison sans fil ou via deux liaisons sans fil.

10. Système d'interaction (110 ; 210 ; 310) selon l'une quelconque des revendications précédentes, comprenant au moins un autre ensemble d'affichage analogue audit ensemble d'affichage (14) et associé à un autre écran avionique (15 ; 115A, 115B ; 215A,...,215D ; 315A,...,315D) ;
le premier module de conversion (31) du boitier de raccordement (16 ; 116A, 116B; 216A, 216B ; 316A, 316B) étant apte à recevoir les données d'interaction issues de l'ensemble d'interaction (24, 25) d'un seul ensemble d'affichage (14) à la fois ;
le deuxième module de conversion (32) du boitier de raccordement (16 ; 116A, 116B ; 216A, 216B ; 316A, 316B) étant apte à transmettre le flux graphique issu de l'équipement monde ouvert (12 ; 112A, 112B ; 212A, 212B ; 312A, 312B) au module d'acquisition vidéo (23) de chaque ensemble d'affichage (14) pour l'afficher dans la deuxième fenêtre de l'écran avionique correspondant.

11. Système d'interaction (110 ; 210 ; 310) selon l'une quelconque des revendications précédentes, comprenant au moins un autre boitier de raccordement (116A, 116B ; 216A, 216B ; 316A, 316B) d'un autre équipement monde ouvert (112A, 112B ; 212A, 212B ; 312A, 312B) en analogue audit boitier de raccordement (16) ;
le module de gestion de média (22) d'au moins un ensemble d'affichage (14) étant configuré pour afficher sur l'écran avionique (15 ; 115A, 115B ; 215A,...,215D ; 315A,...,315D) correspondant un flux graphique issu de cet autre équipement monde ouvert (112A, 112B ; 212A, 212B; 312A, 312B) dans une troisième fenêtre.

12. Système d'interaction (310) selon la revendication 11, comprenant en outre un serveur de commande (370) raccordé audit au moins un ensemble d'affichage et configuré pour transmettre des données d'interaction et des données de fenêtrage vers l'équipement monde ouvert (112A, 112B ; 212A, 212B ; 312A, 312B) correspondant à ces données.

13. Système d'interaction (310) selon la revendication 11 ou 12, comprenant en outre un serveur vidéo (360) apte à transmettre un flux graphique issu de chaque équipement monde ouvert (112A, 112B ; 212A, 212B ; 312A, 312B) vers l'ensemble d'affichage (14) correspondant.

14. Système d'interaction (10 ; 110 ; 210 ; 310) selon l'une quelconque des revendications précédentes, dans lequel :
- le ou chaque boitier de raccordement (16 ; 116A, 116B ; 216A, 216B ; 316A, 316B) est une station d'accueil de l'équipement monde ouvert correspondant ; et
- l'équipement monde ouvert (12 ; 112A, 112B ; 212A, 212B ; 312A, 312B) est une tablette tactile.

## Patentansprüche

1. Interaktionssystem (10; 110; 210; 310) des Cockpits eines Flugzeugs, umfassend:
- eine Anzeigeeinheit (14), die mit einem Avionikbildschirm (15; 115A, 115B; 215A, ..., 215D; 315A, ..., 315D) assoziiert ist und Folgendes umfasst:
+ ein Videoerfassungsmodul (23), das konfiguriert ist, um einen ersten Grafikstrom aus einem Avioniksystem und einen zweiten Grafikstrom aus einem Open-World-Gerät (12; 112A, 112B; 212A, 212B; 312A, 312B) zu erfassen;
+ ein Medienverwaltungsmodul (22), das konfiguriert ist, um die Anzeige auf dem Avionikbildschirm (15; 115A, 115B; 215A,...,215D; 315A,...,315D) zu steuern, um auf diesem Bildschirm den ersten Grafikstrom in einem ersten Fenster und den zweiten Grafikstrom in einem zweiten Fenster anzuzeigen, wobei das Medienverwaltungsmodul (22) ferner konfiguriert ist, um Fensterdaten in Bezug auf die Anordnung verschiedener Fenster auf dem Anzeigebildschirm (15; 115A, 115B; 215A,..., 215D; 315A,..., 315D) zu erzeugen; und
+ eine Interaktionseinheit (24, 25), die geeignet ist, um Interaktionsdaten in Bezug auf jede Interaktion eines Benutzers mit dem Avionikbildschirm (15; 115A, 115B; 215A,...,215D; 315A,...,315D) zu erzeugen;
- einen Anschlusskasten (16; 116A, 116B; 216A, 216B; 316A, 316B) des Open-World-Geräts (12; 112A, 112B; 212A, 212B; 312A, 312B), umfassend:
+ ein erstes Umwandlungsmodul (31), das konfiguriert ist, um die Fensterdaten aus dem Medienverwaltungsmodul (22) und die Interaktionsdaten aus der Interaktionseinheit (24, 25) zu empfangen;
+ ein zweites Umwandlungsmodul (32), das geeignet ist, um einen Grafikstrom aus dem Open-World-Gerät (12; 112A, 112B; 212A, 212B; 312A, 312B) zu empfangen und an das Videoerfassungsmodul (23) zu übertragen, um ihn in dem zweiten Fenster des Avionikbildschirms (15; 115A, 115B; 215A,...,215D; 315A,...,315D) anzuzeigen;
- ein Steuermodul (40) des Open-World-Geräts (12; 112A, 112B; 212A, 212B; 312A, 312B), das konfiguriert ist, um die Fensterdaten und die Interaktionsdaten aus dem ersten Umwandlungsmodul (31) zu verarbeiten, um anhand mindestens einiger der Interaktionsdaten einen Befehl für das Open-World-Gerät (12; 112A, 112B; 212A, 212B; 312A, 312B) zu erzeugen;
wobei die Interaktionseinheit (24, 25) ein Tastgesten-Erfassungsmodul (25) umfasst, das konfiguriert ist, um jede Tastinteraktion des Benutzers mit dem Avionikbildschirm (15; 115A, 115B; 215A,...,215D; 315A,...,315D) zu erfassen und in Interaktionsdaten umzuwandeln;
**dadurch gekennzeichnet, dass**
das Medienverwaltungsmodul (22) über das Tastgesten-Erfassungsmodul (25) an das erste Umwandlungsmodul (31) angeschlossen ist.

2. Interaktionssystem (10; 110; 210; 310) nach Anspruch 1, wobei das Tastgesten-Erfassungsmodul (25) über das erste Umwandlungsmodul (31) an das Steuermodul (40) des Open-World-Geräts (12; 112A, 112B; 212A, 212B; 312A, 312B) angeschlossen ist.

3. Interaktionssystem (10; 110; 210; 310) nach einem der vorherigen Ansprüche, wobei die Interaktionseinheit (24, 25) ein Befehlserfassungsmodul (24) umfasst, das konfiguriert ist, um jede Benutzerinteraktion zu erfassen, die auf ein Zeigegerät und/oder eine Tastatur ausgeübt wird, wobei das Befehlserfassungsmodul (24) direkt an das Medienverwaltungsmodul (22) angeschlossen ist.

4. Interaktionssystem (10; 110; 210; 310) nach einem der vorherigen Ansprüche, wobei das Videoerfassungsmodul (23) konfiguriert ist, um mindestens einen Verarbeitungsvorgang des zweiten Grafikstroms durchzuführen, wobei jeder Verarbeitungsvorgang ausgewählt ist aus der Gruppe, umfassend:
- Extrahieren einer Region von Interesse aus diesem Grafikstrom;
- Drehen dieses Grafikstroms;
- Skalieren dieses Grafikstroms abhängig von der Auflösung dieses Stroms und der Auflösung des zweiten Fensters;
- Translatieren dieses Grafikstroms.

5. Interaktionssystem (10; 110; 210; 310) nach einem der vorherigen Ansprüche, wobei das Steuermodul (40) geeignet ist, um unter Verwendung der entsprechenden Fensterdaten alle Interaktionsdaten in das Bezugssystem des Open-World-Geräts (12; 112A, 112B; 212A, 212B; 312A, 312B) umzuwandeln.

6. Interaktionssystem (10; 110; 210; 310) nach einem der vorherigen Ansprüche, wobei die Fensterdaten Folgendes umfassen:
- Ursprung des zweiten Fensters in dem Bezugssystem des Avionikbildschirms (15; 115A, 115B; 215A,...,215D; 315A,...,315D);
- Abmessungen des zweiten Fensters;
- Neurahmung des zweiten Stroms.

7. Interaktionssystem (10; 110; 210; 310) nach einem der vorherigen Ansprüche, wobei das Steuermodul (40) in den Anschlusskasten (16; 116A, 116B; 216A, 216B; 316A, 316B) integriert ist.

8. Interaktionssystem (10; 110; 210; 310) nach einem der Ansprüche 1 bis 6, wobei das Steuermodul (40) in das Open-World-Gerät (12; 112A, 112B; 212A, 212B; 312A, 312B) integriert ist.

9. Interaktionssystem (10; 110; 210; 310) nach einem der vorherigen Ansprüche, wobei:
- der Anschlusskasten (16; 116A, 116B; 216A, 216B; 316A, 316B) über mindestens zwei Kabel an die Anzeigeeinheit (14) angeschlossen ist, wobei eines der zwei Kabel das erste Umwandlungsmodul (31) mit der Anzeigeeinheit (14) verbindet und vorteilhafterweise vom Typ RS422 ist, und das andere Kabel das zweite Umwandlungsmodul (32) mit der Anzeigeeinheit (14) verbindet und vorteilhafterweise vom Typ SMPTE ist;
- der Anschlusskasten (16; 116A, 116B; 216A, 216B;316A, 316B) an das Open-World-Gerät (12; 112A, 112B; 212A, 212B; 312A, 312B) über mindestens zwei Kabel angeschlossen ist, die vorteilhafterweise miteinander verbunden sind und über einen einzigen Stecker oder über ein Kabel und eine drahtlose Verbindung oder über zwei drahtlose Verbindungen an das Open-World-Gerät (12; 112A, 112B; 212A, 212B; 312A, 312B) angeschlossen sind.

10. Interaktionssystem (110; 210; 310) nach einem der vorherigen Ansprüche, umfassend mindestens eine weitere Anzeigeeinheit, die analog zu der Anzeigeeinheit (14) ist und an einen weiteren Avionikbildschirm (15; 115A, 115B; 215A, ..., 215D; 315A, ..., 315D) angeschlossen ist;
das erste Umwandlungsmodul (31) des Anschlusskastens (16; 116A, 116B; 216A, 216B; 316A, 316B) geeignet ist, um die Interaktionsdaten aus der Interaktionseinheit (24, 25) einer einzigen Anzeigeeinheit (14) zu einer Zeit zu empfangen;
das zweite Umwandlungsmodul (32) des Anschlusskastens (16; 116A, 116B; 216A, 216B; 316A, 316B) geeignet ist, den Grafikstrom aus dem Open-World-Gerät (12; 112A, 112B; 212A, 212B; 312A, 312B) an das Videoerfassungsmodul (23) jeder Anzeigeeinheit (14) zu übertragen, um ihn in dem zweiten Fenster des entsprechenden Avionikbildschirms anzuzeigen.

11. Interaktionssystem (110; 210; 310) nach einem der vorherigen Ansprüche, umfassend mindestens einen weiteren Anschlusskasten (116A, 116B; 216A, 216B; 316A, 316B) eines weiteren Open-World-Gerät (112A, 112B; 212A, 212B; 312A, 312B) analog zu dem Anschlusskasten (16);
wobei das Medienverwaltungsmodul (22) von mindestens einer Anzeigeeinheit (14) konfiguriert ist, um auf dem entsprechenden Avionikbildschirm (15; 115A, 115B; 215A,...,215D; 315A,...,315D) einen Grafikstrom aus diesem anderen offenen Open-World-Gerät (112A, 112B; 212A, 212B; 312A, 312B) in einem dritten Fenster anzuzeigen.

12. Interaktionssystem (310) nach Anspruch 11, ferner umfassend einen Steuerserver (370), der an die mindestens eine Anzeigeeinheit angeschlossen ist und konfiguriert ist, um Interaktionsdaten und Fensterdaten an das Open-World-Gerät (112A, 112B; 212A, 212B; 312A, 312B) zu übertragen, das diesen Daten entspricht.

13. Interaktionssystem (310) nach Anspruch 11 oder 12, ferner umfassend einen Videoserver (360), der geeignet ist, um einen Grafikstrom aus jedem Open-World-Gerät (112A, 112B; 212A, 212B; 312A, 312B) an die entsprechende Anzeigeeinheit (14) zu übertragen.

14. Interaktionssystem (10; 110; 210; 310) nach einem der vorherigen Ansprüche, wobei:
- der oder jeder Anschlusskasten (16; 116A, 116B; 216A, 216B; 316A, 316B) eine Dockingstation für das entsprechende Open-World-Gerät ist; und
- das Open-World-Gerät (12; 112A, 112B; 212A, 212B; 312A, 312B) ein Berührungs-Tablet ist.

## Claims

1. An interaction system (10; 110; 210; 310) for the cockpit of an aircraft, comprising:
- a display assembly (14) associated with an avionic screen (15; 115A, 115B; 215A,...,215D; 315A,...,315D) and including:
+ a video acquisition module (23) configured to acquire a first graphic feed coming from an avionic system and a second graphic feed coming from an open-world equipment item (12; 112A, 112B; 212A, 212B; 312A, 312B);
+ a media management module configured to control the display on the avionic screen (15; 115A, 115B; 215A,...,215D; 315A,...,315D) in order to display, on this screen, the first graphic feed in a first window and the second graphic feed in a second window, the media management module (22) further being configured to generate windowing data relative to the positioning of different windows on the display screen (15; 115A, 115B; 215A,...,215D; 315A,...,315D); and
+ an interaction assembly (24, 25) able to generate interaction data relative to each interaction of the user with the avionic screen (15; 115A, 115B; 215A,...,215D; 315A,...,315D);
- a connection box (16; 116A, 116B; 216A, 216B; 316A, 316B) for the open-world equipment item (12; 112A, 112B; 212A, 212B; 312A, 312B) comprising:
+ a first conversion module (31) configured to receive the windowing data coming from the media management module (22) and the interaction data coming from the interaction assembly (24, 25);
+ a second conversion module (32) able to receive a graphic feed coming from the open-world equipment item (12; 112A, 112B; 212A, 212B; 312A, 312B) and to send it to the video acquisition module to display it in the second window of the avionic screen (15; 115A, 115B; 215A,...,215D; 315A,...,315D);
- a control module (40) of the open-world equipment item (12; 112A, 112B; 212A, 212B; 312A, 312B) configured to process the windowing data and the interaction data coming from the first conversion module (31) in order to generate, from at least some of the interaction data, a command intended for the open-world equipment item (12; 112A, 112B; 212A, 212B; 312A, 312B);
wherein the interaction assembly (24, 25) comprises a tactile gesture acquisition module configured to acquire each tactile interaction by the user with the avionic screen (15; 115A, 115B; 215A,...,215D; 315A,...,315D) and to convert it into an interaction datum;
**characterized in that** the media management module (22) is connected to the first conversion module (31) via the tactile gesture acquisition module (25).

2. The interaction system (10; 110; 210; 310) according to claim 1, wherein the tactile gesture acquisition module (25) is connected to the control module (40) of the open-world equipment item (12; 112A, 112B; 212A, 212B; 312A, 312B) via the first conversion module (31).

3. The interaction system (10; 110; 210; 310) according to any one of the preceding claims, wherein the interaction assembly (24, 25) comprises a command acquisition module (24) configured to acquire each interaction by the user exerted on a pointing device and/or a keyboard, the command acquisition module (24) being connected directly to the media management module (22).

4. The interaction system (10; 110; 210; 310) according to any one of the preceding claims, wherein the video acquisition module (23) is configured to exert at least one processing operation of the second graphic feed, each processing operation being chosen from the group comprising:
- extracting a region of interest from this graphic feed;
- rotating this graphic feed;
- scaling this graphic feed as a function of the resolution of this feed and the resolution of the second window;
- translating this graphic feed.

5. The interaction system (10; 110; 210; 310) according to any one of the preceding claims, wherein the control module (40) is able to convert each interaction datum in the coordinate system of the open-world equipment item (12; 112A, 112B; 212A, 212B; 312A, 312B) by using the corresponding windowing data.

6. The interaction system (10; 110; 210; 310) according to any one of the preceding claims, wherein the windowing data comprise:
- origin of the second window in the coordinate system of the avionic screen (15; 115A, 115B; 215A,...,215D; 315A,...315D);
- dimensions of the second window;
- cropping of the second feed.

7. The interaction system (10; 110; 210; 310) according to any one of the preceding claims, wherein the command module (40) is integrated into the connection box (16; 116A, 116B; 216A, 216B; 316A, 316B).

8. The interaction system (10; 110; 210; 310) according to any one of claims 1 to 6, wherein the command module (40) is integrated into the open-world equipment item (12; 112A, 112B; 212A, 212B; 312A, 312B).

9. The interaction system (10; 110; 210; 310) according to any one of the preceding claims, wherein:
- the connection box (16; 116A, 116B; 216A, 216B; 316A, 316B) is connected to the display assembly (14) via at least two cables, one of the two cables connecting the first conversion module (31) to the display assembly (14) and advantageously being of type RS422, and the other cable connecting the second conversion module (32) to the display assembly (14) and advantageously being of type SMPTE;
- the connection box (16; 116A, 116B; 216A, 216B; 316A, 316B) is connected to the open-world equipment item (12; 112A, 112B; 212A, 212B; 312A, 312B) via at least two cables, advantageously assembled to one another and coupled to the open-world equipment item (12; 112A, 112B; 212A, 212B; 312A, 312B) via a single connector, or via a cable and a wireless connector, or via two wireless links.

10. The interaction system (110; 210; 310) according to any one of the preceding claims, wherein the system comprises another display assembly similar to said display assembly (14) and associated with another avionic screen (15; 115A, 115B; 215A,...,215D; 315A,...,315D);
the first conversion module (31) of the connection box (16; 116A, 116B; 216A, 216B; 316A, 316B) being able to receive the interaction data coming from the interaction assembly (24, 25) of a single display assembly (14) at a time;
the second conversion module (32) of the connection box (16; 116A, 116B; 216A, 216B; 316A, 316B) being able to send the graphic feed coming from the open-world equipment item (12; 112A, 112B; 212A, 212B; 312A, 312B) and to the video acquisition module (23) of each display assembly (14) in order to display it in the second window of the corresponding avionic screen.

11. The interaction system (110; 210; 310) according to any one of the preceding claims, wherein at least one other connection box (116A, 116B; 216A, 216B; 316A, 316B) to another open-world equipment item (112A, 112B; 212A, 212B; 312A, 312B) similar to said connection box (16);
the media management module (22) of at least one display assembly (14) being configured to display, on the corresponding avionic screen (15; 115A, 115B; 215A,...,215D, 315A,...,315D), a graphic feed coming from this other open-world equipment item (112A, 112B; 212A, 212B; 312A, 312B) in a third window.

12. The interaction system (310) according to claim 11, further comprising a control server (370) connected to said at least one display assembly and configured to send interaction data and windowing data to the open-world equipment item (112A, 112B; 212A, 212B; 312A, 312B) corresponding to these data.

13. The interaction system (310) according to claim 11 or 12, further comprising a video server (360) able to send a graphic feed coming from each open-world equipment item (112A, 112B; 212A, 212B; 312A, 312B) to the corresponding display assembly (14).

14. The interaction system (10; 110; 210; 310) according to any one of the preceding claims, wherein:
- the or each connection box (16; 116A, 116B; 216A, 216B; 316A, 316B) is a host station of the corresponding open-world equipment item; and
- the open-world equipment item (12; 112A, 112B; 212A, 212B; 312A, 312B) is a touch-sensitive tablet.
